# EUROPÄISCHE PATENTANMELDUNG

(11) **EP 0 654 926 A2**
(43) Veröffentlichungstag der Anmeldung: **24.05.1995**
(21) Anmeldenummer: 94116903.9
(22) Anmeldetag: 26.10.1994
(51) Int. Cl.: H04L 29/06

(54) **Offener Datenaustausch**

(30) Priorität: 18.11.1993 DE 4339357
(71) Anmelder: /M/A/I Deutschland GmbH, D-63263 Neu-Isenburg (DE)
(72) Erfinder: Heitfeld, Ulrich, D-50859 Köln (DE)
(74) Vertreter: Turi, Michael, Dipl.-Phys.

(57) **Zusammenfassung**

Die vorliegende Erfindung betrifft ein Verfahren zum Betreiben eines offenen Datenaustausches zwischen mehreren über ein Übertragungsmedium verbundenen Rechnern, wobei zwischen Absender- und Empfänger-Rechner in einer Modellierungsphase das Vokabular der auszutauschenden strukturierten und/oder unstrukturierten Daten durch Anlegen einer oder mehrerer Tabellenstrukturen festgelegt wird. Ferner wird ein Netzwerksystem zum Betreiben eines offenen Datenaustausches zwischen mehreren vernetzten Rechnern vorgeschlagen, wobei ein Speicher für das zwischen Absender- und Empfänger-Rechner vereinbarte Vokabular insbesondere auf einer Festplatte eines Kommunikations-Rechners vorgesehen ist.

## Beschreibung

Die Erfindung befaßt sich mit einem Verfahren zum Betreiben eines offenen Datenaustausches zwischen mehreren über ein Übertragungsmedium verbundenen Rechnern bzw. DV-Anlagen sowie mit einem Netzwerksystem zur Durchführung eines derartigen Verfahrens.

Die Kommunikation über Netzwerke beeinflußt den Menschen in immer mehr Lebensbereichen in den unterschiedlichsten Ausprägungen. Von praktisch jedem Bank-, Post- oder Fahrkartenschalter, von jedem Reisebüro besteht zumindest eine Verbindung zu einem zentralen Großrechner. Es gibt spezielle Netzwerke in den unterschiedlichsten Bereichen: So sind in Deutschland im Wissenschaftsbereich viele Hochschulen und Forschungsinstitute über das Deutsche Forschungsnetz (DFN) miteinander verbunden; in der Büroumgebung werden die einzelnen Arbeitsplätze immer häufiger durch sogenannte lokale Netze (LAN) gekoppelt. Die Vernetzung der Rechner erfolgt über entsprechende Übertragungsmedien, welche die Rechner miteinander koppeln. Häufig werden hierfür Kabelverbindungen gewählt und die verschiedenartigsten Topologien, d.h. Arten der Verbindung der Rechner untereinander, realisiert.

Um einen sinnvollen Nachrichtenaustausch zwischen zwei (oder mehreren) Teilnehmern bzw. Teilnehmer-Rechnern im Netzwerk zu ermöglichen, ist neben der reinen Übertragung von Nachrichten über eine irgendwie gestaltete physikalische Verbindung ein Regelwerk erforderlich, das die für eine sinnvolle Kommunikation zwischen den Rechnern im Netzwerk einzuhaltenden Konventionen festlegt. Ein Verfahren der eingangs genannten Art nutzt also die von der Nachrichtentechnik zur Verfügung gestellten Datenkanäle und legt darauf aufbauend Konventionen (Protokolle) für eine sinnvolle Kommunikation zwischen den Teilnehmern im Netzwerk fest. Damit die Rechner im Netzwerk Daten miteinander austauschen können, müssen sie derartige Protokolle einhalten, die zwischen ihnen vorab zu vereinbaren sind. So muß beispielsweise festgelegt werden: wie "0" und "1" dargestellt und übertragen werden und wie die Stecker der Verbindung aussehen; wie eine (logische) Verbindung zwischen den Rechnern zustande kommt und die Art des Zugriffs auf das Kommunikationssytem; die Art des Transports einer Nachricht über das Netz; wie das einwandfreie Überspielen einer Nachricht zu gewährleisten ist, z.B. durch Wiederholungen im Fehlerfall, und wie der Quittierungsvorgang abgewickelt wird; Auf- und Abbau sowie Betrieb der Netzwerkverbindung zwischen den Rechnern einschließlich des Zugriffs auf das jeweilige Betriebssystem des Empfänger-Rechners; und schließlich sind Vereinbarungen über Datentyp und Zeichendarstellung sowie über die verwendete Sprache zu treffen.

Ein Verfahren der eingangs genannten Art, das eine oder mehrere dieser Vereinbarungen zwischen den Rechnern im Netzwerk berücksichtigt, betrifft demnach die Funktionsfähigkeit eines Netzwerksystems - d.h. die Gesamtheit aus Rechner, Übertragungsmedium und Peripheriegeräten - als solches und insbesondere das unmittelbare Zusammenwirken der am Netzwerksystem beteiligten Rechner. Ein derartiges Verfahren bedient sich insofern technischer Maßnahmen, da es die Arbeitsweise des Netzwerksystems verbessert bzw. erst ermöglicht, d.h. einen sicheren und einwandfreien Austausch von Daten und Nachrichten zwischen den Netzwerkrechnern gewährleistet. Durch Vereinbarungen, wie z.B. über die Behandlung von Übertragungsfehlern, wird die Arbeitsweise des Netzwerksystems beeinflußt, weil beispielsweise Totzeiten vermieden werden. Dies betrifft also die Funktionsweise des Netzwerksystems unmittelbar.

Von verschiedenen Herstellern werden bereits unterschiedliche Netzwerksysteme angeboten, auf denen in der Regel ganz spezielle, für das entsprechende System konzipierte Verfahren zum Austausch von Daten ablaufen. In der Regel ist daher ein Datenaustausch zwischen Rechnern von verschiedenen Herstellern mit unterschiedlichen darauf ablaufenden Betriebssystemen - ein sog. "offener" Datenaustausch - nicht möglich.

Die meisten der bekannten Kommunikationsverfahren zwischen einem oder mehreren Teilnehmer-Rechnern (nachfolgend auch als Client-Rechner bezeichnet) und einem zentralen Server-Rechner, auf dem alle Datenbestände gespeichert sind, basieren auf dem sogenannten "Remote Procedure Call (RPC)"-Verfahren. Dabei kommuniziert ein Client-Anwendungsprogramm auf einem im Netzwerk angeschlossenen Client-Rechner mit einem Server-Prozeß, wie z. B. mit der Verwaltung des Zugriffs auf eine Datenbank, über eine sogenannte Socket-Schnittstelle (= Programmier-Schnittstelle für die Kommunikation von Prozessen im UNIX-System).

Damit eine Kommunikation zwischen Client- und Server-Rechner zustandekommt, müssen die Programme auf beiden Rechnern untereinander abgestimmt sein. Dasselbe gilt für jedes weitere Rechnerpaar, zwischen denen ein Datenaustausch stattfinden soll. Zum Beispiel wird für den Client-Rechner eine sogenannte Library (d.h. ein Satz von Funktionen) definiert und in das entsprechende Anwendungsprogramm auf dem Client-Rechner eingebunden, so daß der Datenaustausch mittels genau definierter Funktionen und deren Argumente gewährleistet wird. Um die Zusammenarbeit der verschiedenen Client-Rechner zu gestatten, muß die Library aufwendig für jeden einzelnen Client-Rechner portiert, d.h. an das jeweilige Rechensystem angepaßt werden. Im übrigen wird durch die bereitgestellte Library die Art der ausgetauschten Daten strikt festgelegt, so daß eine flexible Anpassung der Dateninhalte an geänderte Anforderungen nicht möglich ist. Ein weiterer Nachteil des RPC-Verfahrens besteht darin, daß bei unterbrochener Übertragungsverbindung zwischen den Rechnern die laufenden Anwenderprogramme angehalten werden, so daß Daten unter Umständen verloren gehen können. Für den Test der Übertragungsverbindung muß deshalb eigens eine aufwendige spezielle Testumgebung aufgebaut werden. Weitere Einzelheiten zum RPC-Verfahren sind in "TCP/IP Architecture, Protocols and Implementation"; Feit, Sindnie; McGraw-Hill, 1993; Kapitel 12.2 beschrieben.

Ein bekanntes Verfahren der eingangs genannten Art wurde von der Firma SUN Microsystems, Inc. entwickelt und auf den Markt gebracht. Das sogenannte "Network File System (NFS)" - Verfahren ist eine Anwendung des RPC-Verfahrens, und zwar derart, daß beliebige Daten auch zwischen unterschiedlichen Rechnersystemen ausgetauscht werden können. NFS erlaubt Client-Rechnern, auf Dateien in Server-Rechnern schreibend und lesend zuzugreifen. Ein derartiger Zugriff geschieht für die Client-Rechner "transparent", d.h. der Zugriff ist für den Benutzer und sein Anwendungsprogramm (Applikation) nicht sichtbar. Die Übermittlung von Daten zwischen heterogenen Rechnersystemen ist möglich, indem der Client-Rechner einzelne Dateisysteme oder Ausschnitte aus Dateisystemen des Server-Rechners in sein eigenes Dateisystem integriert. Die Bereitstellung der Zugriffsmöglichkeit auf die Dateien im Server-Rechner erfolgt also nicht auf Veranlassung des zugreifenden Programms, sondern muß bereits vor dem Zeitpunkt des Zugriffs für jeden einzelnen Client-Rechner durchgeführt worden sein (vgl. hierzu "TCP/IP und NFS in Theorie und Praxis"; Santifaller, Michael, Addison-Wesley, 1990; Seiten 139-150).

Da einzelne Dateien in Verzeichnissen der Server-Rechner gespeichert werden, sind zum Wiederauffinden genaue Vereinbarungen über Dateinamen und Verzeichnisstrukturen notwendig, was eine feste Kopplung einzelner Rechnerpaare, d.h. zwischen Sender- und Empfänger-Rechner bedingt und ferner die Datenübertragung umständlich und aufwendig gestaltet. Der Aufwand zum Betreiben des Datenaustaussches wird im übrigen dadurch erhöht, daß zusätzlich Absprachen für das koordinierte Lesen und Schreiben der Dateien erforderlich sind.

Neben den vorstehend beschriebenen Verfahren zum Betreiben eines Datenaustausches in lokalen Netzen, gibt es eine Vielzahl von gleichartigen Verfahren für unterschiedliche Anwendungen. Diese Verfahren können unter dem Stichwort "Electronic Document Interchange (EDI)" zusammengefaßt werden und betreffen den elektronischen Austausch von Dokumenten in allen möglichen Geschäftsbereichen mittels unterschiedlicher Datenübertragungsdienste. Grundsätzlich ist jeder Dienst, der Daten mit genügend großer Zuverlässigkeit übertragen kann, geeignet, z.B. Telex, Teletex oder andere Systeme für elektronische Post (E-mail). Um die Zusammenarbeit verschiedener EDI-Systeme aus unterschiedlichen Geschäfsbereichen sicherzustellen, ist eine internationale Standardisierung der elektronischen Darstellung aller möglichen Dokumenttypen angestrebt. Für einige Anwendungen, z.B. EDIFACT (Electronic Document Interchange for Finance, Administration, Transport and Commerce), hat man sich auf eine spezielle Syntax der zu übertragenden Daten bzw. Nachrichten geeinigt (vgl. hierzu "Datenkommunikation und elektronische Post"; Plattner, Bernhard; Addison-Wesley, 1990, Seiten 181-194).

Ein Nachteil der EDI-Netzwerksysteme besteht insbesondere darin, daß die verwendete Syntax starr ist, d.h. in jedem Einzelfall nur für bestimmte Anwendungen ausgelegt und im übrigen schlecht lesbar ist. Eine Vorgehensweise zur Erweiterung bzw. Anpassung der Datenelemente für andere Anwendungsfälle ist nicht vorgesehen. Auch die Möglichkeit zur Abfrage von Daten in fremden Datenbanken wird nicht realisiert. Es wurden bereits in verschiedenen Ländern der Welt Projekte gestartet zur Einführung von EDI-Netzwerksystemen. Ein großer Teil dieser Systeme stützt sich auf Netzwerkkomponenten bestimmter Hersteller,- sind also keine "offenen" Systeme.

Gegenüber diesem Stand der Technik zielt die Erfindung darauf ab, ein Verfahren sowie ein Netzwerksystem der eingangs genannten Art dahingehend weiterzuentwickeln, daß zwischen unterschiedlichen Rechnersystemen Daten verschiedenster Natur zur Weiterverarbeitung austauschbar sind.

Dieses Ziel wird erreicht durch ein Verfahren nach Anspruch 1 zum Betreiben eines offenen Datenaustausches über ein Netzwerk zwischen mehreren über ein Übertragungsmedium verbundenen Rechnern, wobei zwischen Absender- und Empfänger-Rechner in einer Modellierungsphase einmalig das Vokabular, insbesondere Datenstruktur, Integritätsregeln und/oder Zugriffsbedindungen, der auszutauschenden strukturierten und/oder unstrukturierten Daten durch Anlegen einer oder mehrerer Tabellen bzw. Tabellenstrukturen vereinbart wird.

Ferner wird das der Erfindung zugrundeliegende Ziel ebenfalls erreicht durch ein Netzwerksystem nach Anspruch 15 zum Betreiben eines Datenaustausches zwischen mehreren gekoppelten Rechnern, wobei ein Speicher für das zwischen Absender- und Empfänger-Rechner in Form von einer oder mehreren Tabellen festgelegte Vokabular, insbesondere Datenstruktur, Integritätsregeln und/oder Zugriffsbedingungen, der auszutauschenden strukturierten und/oder unstrukturierten Daten vorgesehen ist.

Die erfindungsgemäß vereinbarten Tabellenstrukturen legen mit ihren Feldern und Feldtypen die möglichen Inhalte und Datentypen von über das Netzwerksystem auszutauschenden Daten fest. Durch die Vereinbarung neuer Tabellenstrukturen kann die Art der ausgetauschten Daten jederzeit flexibel verändert werden. Die Art der ausgetauschten Daten kann dabei verschiedenster Natur sein, insbesondere ist eine Anpassung der Dateninhalte an unterschiedlichste Anforderung flexibel möglich. Wird für einen Empfänger-Rechner je nach Bedarf eine bestimmte Tabellenstruktur vereinbart, so muß diese von allen anderen Teilnehmern zur Strukturierung der übertragenen Daten benutzt werden. Diese übersenden ihre Daten an die Adresse des Empfänger-Rechners. Die entsprechend strukturierten Daten werden dann in die vereinbarte Tabelle abgelegt oder direkt vom Empfänger-Rechner verarbeitet. Die weitere elektronische Datenverarbeitung der übertragenen Daten ist entkoppelt vom Ubertragungsvorgang und kann sich auf das bloße Drucken, Darstellen, Modifizieren, etc. beschränken.

Daher wird durch das erfindungsgemäße Verfahren und durch das erfindungsgemäße Netzwerksystem ein "offener" Datenaustauschdienst zur Verfügung gestellt, das sowohl zur Übermittlung von Daten zwischen heterogenen Rechnersystemen, als auch für den Informations- bzw. Nachrichtenaustausch zwischen Teilnehmern des Netzwerkes genutzt werden kann. Zur Unterstützung der rechnergestützten Weiterverarbeitung von übermittelten Daten kann eine beliebige allgemeine Datenstruktur (Format) gewählt werden, die gegenüber dem Stand der Technik nicht starr ist, sondern für die unterschiedlichsten Dateninhalte geeignet ist und mit der eine flexible Anpassung an geänderte Anforderungen möglich ist. Hierdurch ist besonders vorteilhaft ein und dasselbe Netzwerksystem für beliebige Kommunikationsanwendungen und Kommunikationsinhalte flexibel anpaßbar. Dies erfolgt durch die unmittelbare Anpassung der Rechner im Netzwerk auf die erfindungsgemäße Art und Weise, was die Funktionsfähigkeit und somit den Kommunikationsablauf im Netzwerk als solches betrifft.

Mit einem derartigen Netzwerksystem können die unterschiedlichsten Aufgabenstellungen erledigt werden. Neben der Nutzung als Nachrichtenübermittlungssystem (Message Handling System (MHS)) mit reinem ASCII-Text als Inhalt der Mitteilung bietet das erfindungsgemäße Netzwerksystem durch die Spezifikation einer Datenstrukturierung eine Vielzahl anderer Möglichkeiten, z.B. Anfragen an eine Server-Datenbank, eine datentechnische Integration von sogenannten Spezialfunktions-Teilsystemen (STS) oder Kommunikation zwischen Anwenderprogrammen (Applikationen) auf Client-Rechnern.

Vorzugsweise wird das Vokabular strukturierter Daten mittels einer standardisierten Datendefinitionssprache, z.B. Structured Query Language - Data Definition Language (SQL-DDL), festgelegt (Anspruch 2). SQL-DDL gehört zur Abfragesprache Structured Query Language (SQL), die in ISO 9075, 1989 spezifiziert ist und für die Wiedergewinnung von Daten aus Datenbanken verwendet wird. Dementsprechend wurde SQL-DDL bisher für die Spezifikation der erlaubten Datenstrukturen in einer Datenbank eingesetzt. Die erfindungsgemäße Verwendung von SQL-DDL zur Strukturierung auszutauschender Daten in einem Netzwerksystem ist eine vom reinen Datenbank-Einsatz losgelöste vorteilhafte Erweiterung dieser bisherigen Verwendung. Hier werden die Objekte der Kommunikationseinheiten mittels der SQL-DDL in der Modellierungsphase zwischen den Teilnehmern bzw. Teilnehmer-Rechnern am Netzwerk je nach Erfordernis ausgehandelt und festgelegt.

Durch die Verwendung von einfachen, allgemein anerkannten Standards - wie SQL - ist das erfindungsgemäße Verfahren nicht spezifisch auf einzelne Anwendungen beschränkt. Mittels der SQL-DDL kann das Netzwerksystem den Gegebenheiten der Kommunikationspartner flexibel angepaßt werden. Neben der Spezifikation der Tabellenstrukturen kann durch die standardisierte SQL-DDL auch das Format der übertragenen Kommunikationseinheiten festgelegt bzw. erweitert werden.

Vorzugsweise wird eine standardisierte Datenmanipulationssprache, z.B. Structured Query Language - Data Manipulation Language (SQL-DML), zum Austausch strukturieter Daten zwischen insbesondere hetereogenen Rechnern eingesetzt (Anspruch 3).

Eine Datenmanipulationssprache bzw. Datenhandhabungssprache vom Typ SQL-DML stellt in der Regel ausführbare Anweisungen zur Verfügung zum Manipulieren oder Verwalten (Einfügen, Ändern, Löschen) von Daten aus Datenbanken. Der erfindungsgemäße Einsatz von SQL-DDL in einer herterogenen Netzwerkumgebung ist eine vorteilhafte Erweiterung der ursprünglichen datenbankbezogenen Verwendung der SQL-DML. Weder die Datenquelle noch die Datensenke, z.B. Anwendungsprogramme auf den an der Kommunikation beteiligten Rechnern, müssen Datenbanken sein. Durch Verwendung von SQL-DML als Syntax der Kommunikationseinheiten sind besonders vorteilhaft neben der Übermittlung von neuen Daten auch Modifikationen schon versendeter Daten sowie Abfragen von Daten möglich.

Da die Kommunikations-Rechner in der Regel auch Datenbanken als Datenquelle oder Datensenke benutzen werden, ermöglicht die Verwendung von SQL-DML jederzeit eine einfache Anbindung von Datenbanken auf beiden Seiten der Übertragung, da SQL-DML als "Datenbank-Manipulationssprache" von den meisten Datenbanken unterstützt wird.

Im übrigen sind die ausgetauschten Kommunikationseinheiten durch die Verwendung von SQL jederzeit lesbar. Auf diese Weise kann der Datenaustausch auf einfache Weise überprüft werden.

Vorzugsweise werden die zwischen Absender- und Empfänger-Rechner ausgetauschten unstrukturierten Daten, z.B. mit einem Textverarbeitungsprogramm erstellte Texte, als ASCII-Texte oder als Binary Large Objects (BLOB) verarbeitet (Anspruch 4). ASCII-Texte können beliebige 7-Bit-Texte sein. BLOB-Objekt kann ein mit einem Textverarbeitungsprogramm, z.B. mit WinWord, erzeugtes Dokument sein. Im Rahmen der erfindungsgemäßen Modellierungsphase wird auch festgelegt, welche BLOB-Typen von den potentiellen Empfänger-Rechnern verarbeitet werden können.

Bevorzugt werden die für eine sinnvolle Kommunikation vereinbarten Tabellenstrukturen in einem Datenbank-Management bzw. Datenbankverwaltungssystem (DBMS) gespeichert und mit dem Namen des Empfänger-Rechners der strukturierten Daten gekennzeichnet (Anspruch 5). Diese in dem DBMS installierten Tabellen können für die Überprüfung der ausgetauschten Daten in einer Testphase genutzt werden. Erfindungsgemäß müssen die Daten auf der Empfänger-Rechnerseite nicht notwendigerweise in einer Datenbank abgelegt werden.

Daher stellt sich beim Versenden von strukturierten Daten der Empfänger-Rechner für den Absenderrechner einfach als eine Art virtuelle Datenbank mit den erfindungsgemäß definierten Tabellen dar, an die er Daten verschicken oder von der er Daten abfragen kann. Da diese Datenbank nicht wirklich auf der Empfänger-Rechnerseite existiert, wird sie nachfolgend als Pseudo-Datenbank bezeichnet. Die Kommunikationspartner sind demzufolge gleichberechtigt. Es gibt im Vergleich zum Stand der Technik keine echte Differenzierung zwischen Client- und Server-Rechner. Das erfindungsgemäße Verfahren ermöglicht daher eine symmetrische Arbeitsweise, d.h. ein Rechner kann gleichzeitig Server-Rechner und Client-Rechner sein. Zwei Kommunikations-Rechner können beliebig gegenseitig auf ihre Daten zugreifen.

Vorzugsweise wird jedem Spezialfunktions-Teilsystem (STS) bzw. Fremdsystem - d.h. am Netzwerk angeschlossene Rechner (Server-Rechner und/oder Client-Rechner, die Anwendungsprogramme abwickeln), die nur für ganz bestimmte Kommunikationsaufgaben vorgesehen sind - , eine derartige Pseudo-Datenbank zugeordnet. Durch die Strukturen der Tabellen in dieser Pseudo-Datenbank wird zum einen das für eine sinnvolle Kommunikation mit anderen Client-Rechnern im Netzwerk notwendige Vokabular der vom STS zu verarbeitenden strukturierten Daten festgelegt. Außerdem werden hierdurch die für die Kommunikation mit einer Server-Datenbank erforderlichen Vereinbarungen über die Struktur abzufragender Daten getroffen.

Für verschiedene Anwendungsfälle ist es sinnvoll, daß Teilnehmer am Netzwerk auch fremde Applikationen bzw. Anwenderprogramme nutzen, die ihnen beispielsweise durch einen sog. Kommunikations-Rechner zur Verfügung gestellt werden, und für jede Applikation eine zugehörige Pseudo-Datenbank für den Austausch strukturierter Daten installieren (Anspruch 6). Somit ist vorteilhaft jedem Teilnehmer des Netzwerksystems die Möglichkeit gegeben, Datendokumente mit Hilfe fremder Applikationen abzurufen bzw. zu erstellen und auszutauschen.

Um die Sicherheit des Netzwerksystems zu erhöhen, werden zusätzlich Zugriffsberechtigungen (GRANT) für bestimmte Absender- bzw. Empfänger-Rechner vereinbart. Vorzugsweise werden dabei spezielle Datenstrukturen (VIEW) definiert, dergestalt, daß nur lesende Zugriffe für einen Absender-Rechner auf Daten z.B. einer zentralen Datenbank eines Datenbank-Servers zugelassen werden (Anspruch 7 und 8). Derartige VIEWs, die eine bestimmte spezifische Sicht (= VIEW) auf Daten einer Server-Datenbank erlauben, werden ebenfalls in der oben genannten Modellierungsphase in Absprache mit den einzelnen Teilnehmern des Netzwerksystems vereinbart. Diese VIEWs können auch Daten aus mehreren Tabellen in der zentralen Datenbank verknüpfen.

Durch die erfindungsgemäße Festlegung von GRANTs wird bestimmt, ob ein Einfügen, Löschen, Auswählen oder Verändern der in einer Datenbank abgespeicherten Datenbestände prinzipiell erlaubt sein soll. Es ist damit auch möglich, derartige Berechtigungen nur für bestimmte Absender festzulegen. Dies ist eine geeignete Maßnahme, um Unbefugten den Zugang zum Netzwerksystem, insbesondere zu einer zentralen Server-Datenbank, zu verwehren. Daten, die von einer derartigen Datenbank abgefragt oder automatisch verschickt werden, sind durch diesen Zugriffsmechanismus vor unbefugtem Lesen oder Modifizieren geschützt.

Bei einem besonders bevorzugten Ausführungsbeispiel des erfindungsgemäßen Verfahrens schließt sich an die Modellierungsphase eine Testphase an, worin die Einhaltung des vereinbarten Vokabulars durch Absetzen von Abfragen, insbesondere von SQL-Abfragen, an die eingerichteten Tabellen überprüft wird (Anspruch 9). Dazu werden von einem Rechner entsprechende Statements der Abfragesprache SQL an die Tabellen-Datenbank geschickt. Im Falle eines Fehlers werden die vom zugehörigen Datenbank-Managementsystem generierten Fehler-Mitteilungen als Mitteilung an den Absender-Rechner zurückgeschickt.

Bei einer bevorzugten Ausbildung des erfindungsgemäßen Verfahrens wird den Teilnehmern im Netzwerk bei Änderungen von bestimmten Tabellen in der zentralen Datenbank automatisch eine Mitteilung über diese Änderungen zugeschickt (Anspruch 10). Auf diese Weise können Client-Rechner und deren Anwendungsprogramme sofort reagieren und die Inhalte von über das Netzwerksystem auszutauschenden Daten auf die neuen Felder und Feldtypen der geänderten Tabellenstrukturen anpassen.

Eine weitere bevorzugte Erweiterung des erfindungsgemäßen Verfahrens besteht darin, daß konventionelle Spezialfunktions-Teilsysteme, die andere als das erfindungsgemäße Kommunikationsverfahren nutzen (konventionelle STS), durch entsprechende Treiber eingebunden werden und für jede Anbindung eines konventionellen STS eine Pseudo-Datenbank angelegt wird (Anspruch 11). Hierdurch wird jeder Client-Rechner zu einem definitiv multifunktionellen Arbeitsplatz ausgebaut, insbesondere durch Anschluß an Telematikdienste, z.B. Telefon, Telex, Teletex, Telefax und/oder Bildschirmtext. Daten können damit abgefragt, verändert, angezeigt, abgespeichert, aufgefunden und wahlfrei über mehrere Kommunikationswege versendet und empfangen werden.

Vorzugsweise wird die Kommunikation zwischen den am Netzwerk angeschlossenen Rechnern über elektronische Post (Electronic Mail oder E-Mail) abgewickelt und zur Steuerung der Kommunikation ein standardisiertes Steuerprotokoll, z.B. das Simple Mail Transfer Protocol (SMTP), verwendet (Anspruch 12). Ein Datenübertragungsdienst wie E-Mail ermöglicht auch die Kommunikation zwischen z.T. heterogenen Rechnersystemen. Damit kann ein effizienter und zuverlässiger Datenaustausch realisiert werden. Im übrigen wird durch E-Mail eine zeitliche Entkopplung der Datenverarbeitung zwischen Datenquelle und Datensenke durch Pufferung der übertragenen Daten erreicht. Die übertragenen Daten werden nämlich in einem elektronischen Briefkasten (Mailbox) des Empfänger-Rechners gespeichert und bei Bedarf abgerufen (indirekte Kommunikation). Die elektronische Weiterverarbeitung dieser Daten ist problemlos möglich.

Das SMTP, wie in RFC 821 1982, spezifiziert, ist der Standard für die elektronische Post im Internet. SMTP zeichnet sich insbesondere durch seine Einfachheit aus. Ein Datenversand über E-Mail kommt mit ausgesprochen wenigen Protokollelementen aus. Im übrigen ist bei der Verwendung des SMTP im Gegensatz zum einleitend beschriebenen RPC-Verfahrens keine Portierung bzw. Anpassung der Netzwerkschnittstelle auf dem Client-Rechner notwendig.

Im Gegensatz zum bekannten NFS-Verfahren findet bei der Verwendung von E-Mail eine weitestgehende Entkopplung von Sender und Empfänger-Rechner statt, da der Sender nur die E-Mail-Adresse des Empfänger-Rechners bzw. der beim Empfänger-Rechner angebotenen Dienste benötigt. Das gesamte Datei-Handling wird durch einen im E-Mail integrierten sogenannten ''Mailer-Daemon'' erledigt, einschließlich der Fehlerbearbeitung. Dieser Daemon ist ein Programm, welches den Datenaustausch zwischen Rechnern über E-Mail durchführt und für die Zustellung der E-Mail-Daten an die entsprechende Mailbox des lokal benannten Empfänger-Rechners sorgt. Auf UNIX-Systemen wird diese Aufgabe beispielsweise durch das Programm ''sendmail'' implementiert.

Vorzugsweise werden über Gateways Daten mit wenigstens einem weiteren Netzwerk ausgetauscht (Anspruch 13). Derartige Gateways gewährleisten die Kopplung von zwei oder mehreren verschiedenen Netzwerken. Über Gateways können die unterschiedlichsten Netzwerke gekoppelt werden, ohne daß dabei die Art der verwendeten Dateiverwaltung auf den beteiligten Rechnern eine Rolle spielt. Durch Kopplung an öffentliche Netzwerke können daher auf diese Weise verschiedene Rechnersysteme in der ganzen Welt Daten zur weiteren elektronischen Verarbeitung austauschen.

Bevorzugt findet der Datenaustausch beim erfindungsgemäßen Netzwerksystem über ein Ethernet-Netz bzw. Etherner-Vernetzung statt. Ferner wird zur Steuerung des Datentransports ein standardisiertes Transportprotokoll, z.B. das Transport Control Protocol/ Internet Protocol (TCP/IP), verwendet (Anspruch 14).

IP ist im RFC 791 und TCP in RFC 793 spezifiziert. TCP/IP sind Protokolle, die in ihrer Funktionalität der Transportebene (TCP) bzw. der Netzwerkebene (IP) im ISO-Referenzmodell zuzuordnen sind. TCP stellt das einwandfreie Überspielen von Daten sicher, z.B. durch Wiederholungen im Fehlerfall. IP ist dagegen verantwortlich für den Aufbau, Betrieb und den Abbau einer Netzwerkverbindung.

Eine bevorzugtes Ausführungsbeispiel des erfindungsgemäßen Netzwerksystem, insbesondere zur Durchführung eines der vorstehend beschriebenen Verfahren, besteht in der Vernetzung von wenigstens einem Kommunikations-Rechner, wenigstens einem Datenbank-Server-Rechner, wenigstens einem Client-Rechner, die über eine oder mehrere Brücken miteinander verbunden sind (Anspruch 16). Für den Kommunikations-Rechner ist eine leistungsfähige Workstation vorgesehen, auf der die für die Kommunikation benötigten Datenbestände gespeichert sind und ferner Anwendungsprogramme für alle Teilnehmer-Rechner zur Verfügung gestellt werden. Auf dem Server-Rechner mit großer Festplattenkapazität sind Datenbanken aus einem bestimmten abgegrenzten Informationsbereich angelegt, die von einem oder mehreren autorisierten Clienten abgefragt und verändert werden können. Der Client-Rechner kann eine Workstation oder ein einfacher Personalcomputer sein, worauf Anwendungsprogramme laufen, die mit Prozessen auf dem Kommunikations-Rechner und dem Server-Rechner kommunizieren.

Besonders vorteilhaft ist die Vernetzung der Rechner über eine Brücke (Bridge), die der Kopplung von gleichartigen Teil- bzw. Subnetzen im Netzwerk dient. Eine derartige Kopplung ist unter anderem insofern vorteilhaft, als sie eine Begrenzung von Netzfehlern auf kleinere Teilnetze ohne Beeinträchtigung anderer Subnetze gewährleistet, sich parallele Arbeiten auf lokalen Subnetzen nicht beeinflussen und insgesamt eine geographische Erweiterung des Netzwerks je nach Anforderung möglich ist.

Vorzugsweise ist das erfindungsgemäße Netzwerksystem über Gateways mit wenigstens einem weiteren Netzwerk gekoppelt (Anspruch 17). Derartige Gateways ermöglichen die Verbindung von eigentlich inkompatiblen Systemen, so daß über öffentliche Netzwerke auf diese Art und Weise unterschiedliche Rechnersysteme in der ganzen Welt Daten zur weiteren elektronischen Verarbeitung austauschen können.

Für besondere Anwendungsfälle ist es sinnvoll, daß das erfindungsgemäße Netzwerksystem einen Anschluß an Telematikdienste, insbesondere Telex, Teletex, Telefax und/oder Bildschirmtext, aufweist (Anspruch 18). Hierdurch wird ein multifunktioneller Daten-Austauschdienst realisiert, wobei Daten wahlweise über verschiedenste Kommunikationswege versandt und empfangen werden können.

Vorzugsweise ist das erfindungsgemäße Netzwerk als Ethernet-Netz bzw. Ethernet-Vernetzung ausgebildet. Dabei können alle Rechner durch Kupferleitungen, Koaxialkabel oder Glasfasern verbunden sein. Alternativ dazu kann der erfindungsgemäße Datenaustausch zwischen den Rechnern aber auch unter Nutzung drahtloser Verbindungen, z.B. Infrarot- oder Funknetzverbindung, ablaufen (Anspruch 19, 20 und 21). Eine derartige Vernetzung zeichnet sich aus durch hohe Übertragungsraten (10 Mbit-s), durch Gleichberechtigung aller Rechner, denen gleiches Senderecht gewährt wird, - und durch seine Bus-Topologie. Bei dieser Struktur sind mehrere Rechner passiv an das Übertragungsmedium angeschlossen, d.h. die Anwesenheit eines Rechners hat für die Übertragung von einem anderen Rechner keine Auswirkungen (im Gegensatz zur aktiven Ring-Topologie). Der Vorteil der Passivität der Rechner besteht darin, daß neue Rechner im laufenden Betrieb an das Netzwerk angeschlossen werden können; entsprechend unproblematisch ist auch das Abschalten oder der Ausfall eines Rechners.

Weitere Vorteile und Ausgestaltungen der Erfindung ergeben sich aus der nachfolgenden Beschreibung bevorzugter Ausführungsbeispiele. In dieser Beschreibung wird auf die beigefügte schematische Zeichnung Bezug genommen. In der Zeichnung zeigen:
- Fig. 1: eine schematische Darstellung mehrerer Ausführungsbeispiele für die Anwendung des erfindungsgemäßen Verfahrens;
- Fig. 2: eine schematische Darstellung eines bestimmten Ausführungsbeispiels für das erfindungsgemäße Verfahren;
- Fig. 3: eine schematische Darstellung der für ein Ausführungsbeispiel des erfindungsgemäßen Verfahrens verwendeten Standards; und
- Fig. 4: ein Ausführungsbeispiel für das erfindungsgemäße Netzwerksystem.

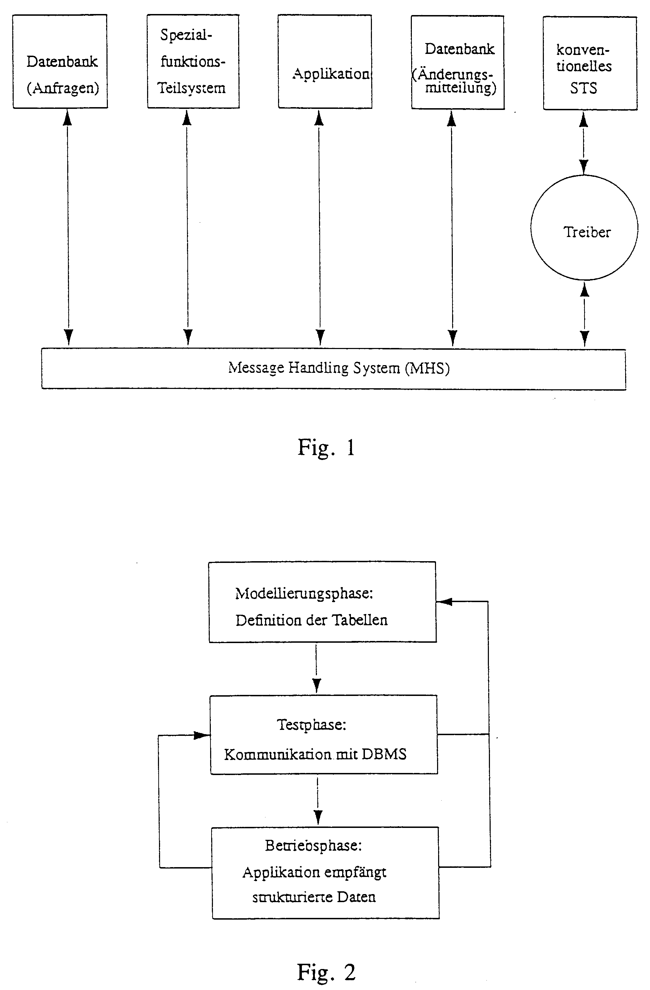

Als Beispiel wird nachfolgend die Erfindung als Datenaustauschdienst zischen den unterschiedlichen Funktionsbereichen innerhalb eines Krankenhauses beschrieben, - ist aber darauf selbstverständlich nicht beschränkt. Das erfindungsgemäße Netzwerksystem wird sowohl zur Übermittlung von Daten, z.B. Personaldaten zur Identifizierung von Patienten, zwischen heterogenen Rechnersystemen, als auch zum Nachrichtenaustausch, z.B. von Befundtexten, zwischen Client-PCs genutzt. Die Art der ausgetauschten Daten kann dabei verschiedenster Natur sein, insbesondere ist eine Anpassung der Dateninhalte an unterschiedlichste Anforderungen jederzeit flexibel möglich. Die weitere Datenverarbeitung kann sich dann auf das bloße Drucken oder Darstellen beschränken. Durch die Spezifikation einer Strukturierung der ausgetauschten Daten bietet das erfindungsgemäße Verfahren verschiedene Dienstleistungen an, die in Fig. 1 schematisch dargestellt sind und auf die nachfolgend im einzelnen eingegangen wird.

Neben der angesprochenen Nutzung als Nachrichtenübermittlungssystem (Message Handling System (MHS)) zur Übertragung unstrukturierter Daten aus reinem ASCII-Text als Inhalt der Mitteilung sind beispielsweise Anfragen bzw. Abfragen an eine zentrale Datenbank bzw. Datenspeicher durch die Teilnehmer- bzw. Client-Rechner des Netzwerksystems möglich. Die zentrale Datenbank ist auf der Festplatte eines Server-Rechners angelegt und bildet einen zentralen Datenpool für alle in einem Krankenhaus für die patientenorientierte integrierte Datenverarbeitung benötigten Daten. Mehrere Client-Rechner (einfache PCs oder Workstations) in den verschiedenen Funktionsbereichen eines Krankenhauses, z.B. in den Abteilungen, an der Eingangspforte, etc., aber auch außerhalb des Krankenhauses, z.B. in einer Apotheke, sind in der Art eines Ethernet-Netzes vorzugsweise durch ein Koaxialkabel, das als Bus geschaltet ist, mit dem Server-Rechner verbunden. Über dieses Netzwerk ist es den Teilnehmern möglich, ohne entsprechende Abstimmung der Rechnersysteme zwischen Server-Rechner und Client-Rechner Daten aus der zentralen Datenbank abzufragen.

Dazu werden in einer sogenannten Modellierungsphase in Absprache mit den einzelnen Client-Rechnern die Struktur der auszutauschenden bzw. abzufragenden Daten vereinbart. Diese speziellen Datenstrukturen (im nachfolgenden als VIEWs bezeichnet) werden durch Anlegen einer oder mehrerer Tabellen mittels einer standardisierten Datendefinitionssprache, z.B. SQL-DDL, erzeugt. Die Strukturen dieser Tabellen legen mit ihren Feldern und Feldtypen die möglichen Inhalte der von der Server-Datenbank abzufragenden Daten fest. Für jeden Empfänger-Rechner wird ferner eine sogenannte Pseudo-Datenbank bzw. Pseudo-Datenspeicher angelegt, in der eine oder mehrere Tabellen mit der vereinbarten Struktur gespeichert sind. Auf diese Pseudo-Datenbank wird dann die Antwort des Datenbank-Servers auf eine Anfrage des Client-Rechners übertragen. Beim Versenden von strukturierten Daten, z.B. von Falldaten eines Patienten, wie Nummer, Name, Geburtsdatum, etc., stellt sich der Empfänger-Rechner für den Server-Rechner wie eine Datenbank mit den bisher definierten Tabellen dar, an die er die angefragten Daten absetzen kann. Da diese Datenbank nicht notwendigerweise auf der Client-Rechnerseite realisiert ist, wird diese Datenbank als Pseudo-Datenbank bezeichnet.

Über die vereinbarten speziellen Datenstrukturen (VIEWs) wird im wesentlichen der Zugriff auf Daten der zentralen Datenbank festgelegt. Diese VIEWs können auch Daten aus mehreren Tabellen in der Datenbank verknüpfen. Auf diese VIEWs werden aber die Zugriffsrechte aus Sicherheitsgründen derart eingeschränkt, daß nur lesende Zugriffe für den Absender der Anfrage zugelassen und somit Modifikationen der Daten in der Datenbank ausgeschlossen werden.

Die Kommunikation zwischen den Rechnern wird über elektronische Post (E-Mail) abgewickelt, die einen effizienten und zuverlässigen Datenaustausch gewährleistet. Zur Steuerung der Kommunikation wird das Simple Mail Transfer Protocol (SMTP) benutzt, das in RFC 821, 1982, spezifiziert ist. In der Betriebsphase werden dann Anfragen von einem Client-Rechner per E-Mail an den Datenbank-Server geschickt. Sofern von einem Datenbank-Managementsystem die Leseberechtigung des Absenders der E-Mail festgestellt ist, wird das Ergebnis der Anfrage an den Absender der Anfrage als E-Mail zurückgeschickt und an die dem Absender entsprechende Pseudo-Datenbank abgesetzt. Reagiert das Datenbank-Managementsystem auf die Anfrage mit einer Fehlermeldung, wird eine Fehlermitteilung zusammen mit der Anfrage zurückgeschickt.

Ein weiteres Ausführungsbeispiel für das erfindungsgemäße Verfahren besteht in der Anbindung von sogenannten Spezialfunktion-Teilsystemen (STS) bzw. Fremdsysteme an das erfindungsgemäße Netzwerksystem. Derartige STS können einzelne Rechner, auf denen Anwendungsprogramme laufen, oder autonome Teilnetze sein, die mit dem Netzwerksystem ausgetauschte Daten weiterverarbeiten.

Jedem dieser STS wird eine Pseudo-Datenbank zugeordnet. Die Strukturen der Tabellen in dieser Pseudo-Datenbank legen die möglichen Inhalte der mit dem Netzwerksystem auszutauschenden Daten fest. Hierdurch wird für die Kommunikation mit den anderen Teilnehmern im Netzwerksystem das spezifische Vokabular, nämlich Datenstruktur sowie Integritäts- bzw. Konsistenzregeln, der von den STS zu verarbeitenden strukturierten Daten vereinbart; ferner wird hierdurch auch die für die Kommunikation der STS mit einer Server-Datenbank spezifische Sicht (VIEW) auf Tabellen der Datenbank definiert.

Auch hier werden diese Tabellenstrukturen in der obengenannten Modellierungsphase festgeschrieben, wobei die Tabellen am Ende der Modellierungsphase in einer Datenbank (Pseudo-Datenbank) des zentralen Datenbank-Managementsystems gespeichert werden. Diese Datenbank wird mit dem Namen des Empfänger-Rechners der strukturierten Daten gekennzeichnet. Der Empfänger-Rechner ist damit der Eigentümer der Tabellen dieser Datenbank.

Vorzugsweise werden in derselben Phase auch Zugriffsberechtigungen (GRANTs) festgelegt, um die Übermittlung von neuen Daten oder die Modifikationen schon versendeter Daten auf bestimmte Teilnehmer des Netzwerksystems zu beschränken.

An die Modellierungsphase schließt vorzugsweise eine sogenannte Testphase an, in der die Einhaltung des verabredeten Vokabulars der auszutauschenden Daten durch Absetzen von Statements einer standardisierten Abfragesprache (z.B. der Structured Query Language (SQL)), auf die real existierenden Tabellen der Server-Datenbank überprüft werden kann.

Dazu werden entsprechende E-Mails an den Datenbank-Server geschickt. Im Falle eines Fehlers wird vom Datenbank-Managementsystem eine Fehlermeldung generiert und als Mitteilung an den Absender zurückgeschickt.

In der Betriebsphase stellt sich beim Versenden von strukturierten Daten der Empfänger-Rechner für den Absender-Rechner wie eine Datenbank mit den bisher definierten Tabellen dar, an die er E-Mails in Form von SQL-Statements, z.B. Abfragen von Daten, Modifikationen schon versendeter Daten oder Übermittlung von neuen Daten, absetzen kann. Auf diese Weise sind die Kommunikations-Rechner gleichberechtigt. Es gibt eigentlich keine Unterscheidung zwischen Client- und Server-Rechner.

Auf der Empfänger-Rechnerseite werden dann die übertragenen Daten unabhängig vom Übertragungsvorgang ausgewertet. Mögliche Anwendungen hierfür sind:
- Übertragung der Daten in einen eigenen Datenbankspeicher;
- Ablage der Daten in einer bestimmten Form im lokalen Dateisystem;
- Darstellung der Daten auf einem Bildschirm; oder
- direkte Verarbeitung der Daten durch Berechnungen abgeleiteter Größen aus diesen Daten.

Die Kommunikationsabläufe zwischen Modellierungs-, Test- und Betriebsphase sind schematisch in Fig. 2 dargestellt.

Als Beispiel für die Kommunikation eines STS mit anderen Teilnehmern im Netzwerksystem sei der Datenaustausch zwischen der Verwaltung in einem Krankenhaus und Client-Rechnern der einzelnen Abteilungen erläutert. Für das STS ''Verwaltung'' wird eine entsprechende Tabelle definiert und in einer Pseudo-Datenbank abgelegt. Die Verwaltung ist somit Eigentümer dieser Pseudo-Tabelle. Um eine sinnvolle Kommunikation zu gewährleisten, muß diese Pseudo-Tabelle von allen anderen Teilnehmern zur Strukturierung der übertragenen Leistungsdaten benutzt werden. Diese übersenden ihre Leistungsdaten als E-Mail-Mitteilungen an die Adresse der Verwaltung, wobei die entsprechend strukturierten Leistungsdaten in die definierte Tabelle abgelegt werden.

Für bestimmte Anwendungsfälle ist es sinnvoll, für Teilnehmer am Netzwerksystem ohne STS bzw. Client-Rechner ohne eigene Anwendungsprogramme einen leistungsstarken Kommunikations-Rechner an das Netzwerk anzuschließen, auf dem verschiedene Anwendungsprogramme von den Netzwerkteilnehmern genutzt werden können, z.B. zum Erstellen oder zur Einsichtnahme in ärztliche Befunde. Da eine derartige Applikation ebenfalls ein möglicher Empfänger-Rechner von strukturierten Daten sein kann, müssen die Möglichkeiten zur Auswertung dieser Daten in der Modellierungsphase durch Anlegen einer Pseudo-Tabelle - wie vorstehend beschrieben - berücksichtigt werden.

In einer weiteren Ausführungsform des erfindungsgemäßen Verfahrens wird den Teilnehmern am Netzwerksystem die Dienstleistung angeboten, über Änderungen von bestimmten Tabellen in der zentralen Datenbank und damit über veränderte Strukturen der auszutauschenden Daten automatisch (implizit) eine Mitteilung über diese Änderungen zugeschickt zu bekommen.

Auch in diesem Anwendungsfall wird in der Modellierungsphase der Inhalt dieser Änderungsmitteilung durch Vereinbarung eines VIEW (eine spezifische Sicht) auf eine oder mehrere Tabellen einer für einen Teilnehmer am Netzwerksystem angelegten Datenbank festgelegt.

In einem ersten Modellierungsschritt wird festgelegt, welche der ursprünglich vereinbarten Tabellen für die Teilnehmer modifiziert werden müssen. Im zweiten Schritt wird ein VIEW auf die Datenbank-Tabellen für die jeweiligen Teilnehmer festgelegt und im letzten Schritt werden schließlich bestimmte Tabellen ausgewählt und die Art ihrer Modifikation bestimmt, die schließlich als Aktualisierungsmitteilung an die Adresse der jeweiligen Teilnehmer geschickt wird.

In der Betriebsphase wird eine Änderungsmitteilung dadurch ausgelöst, daß neue Daten auf ausgewählte Sätze der Tabellen der Teilnehmer-Datenbanken geschickt bzw. dort vorhandene Daten modifiziert werden.

Auf diese Weise können z.B. im Krankenhaus bei jeder Verlegung eines Patienten neue Falldaten an andere Abteilungen automatisch weitergegeben werden. Sogar die krankenhausinterne Rufanlage kann auf diese Art und Weise über jede Änderung zum Beispiel der Patient-Bett-Zuordnung informiert werden.

Das erfindungsgemäße Verfahren erlaubt es auch, Spezialfunktion-Teilsysteme, die nicht über das hier verwendete SMTP-Protokoll für den E-Mail-Transport angeschlossen werden können, über spezifische Treiber einzubinden. Diese Treiber wandeln strukturierte Mitteilungen in das STS-eigene Format um und senden diese Daten über eine standardisierte Schnittstelle, z.B. RS-232, an das STS weiter. Auf gleichem Wege können auch Daten empfangen werden, die dann in entsprechende SQL-Statements umgesetzt und per E-Mail an einen vorgesehenen Empfänger-Rechner verschickt werden.

In der Modellierungsphase wird auch hier für jede Anbindung eines konventionellen STS eine entsprechende Pseudo-Datenbank angelegt.

Als Beispiel sei hier die Kopplung der Personenrufanlage oder der Telefonanlage an das krankenhauseigene Netzwerksystem genannt.

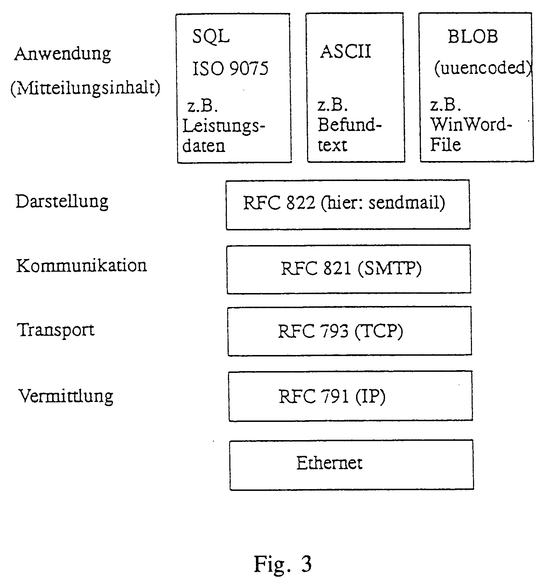

In Fig. 3 sind die für das erfindungsgemäße Verfahren vorgeschlagenen Standards schematisch dargestellt. Durch die Verwendung von einfachen, allgemein anerkannten Standards ist das vorliegende Verfahren nicht spezifisch auf einzelne Anwendungen beschränkt.

Als Transportprotokoll wird vorzugsweise das Transmission Control Protocol/Internet Protocol (TCP/IP) verwendet. TCP ist ein Protokoll, das seiner Funktionalität nach der Transportebene dem ISO-Referenzmodell zuzuordnen ist. IP entspricht hingegen der Netzwerkebene. Beide Protokolle gewährleisten eine zuverlässige Inter-Prozeß-Kommunikation in einem Internet. Die einzelnen Rechner sind über ein Ethernet-Netz miteinander verbunden. Die Kommunikation zwischen den z.T. heterogenen Rechnersystemen wird über elektronische Post (E-Mail) abgewickelt. Hierdurch wird ein effizienter und zuverlässiger Datenaustausch, insbesondere das Versenden von Textdokumenten, von einem Rechner zu einem beliebigen anderen Rechner gewährleistet. Zur Steuerung der Kommunikation wird das Simple Mail Transfer Protocol (SMTP) benutzt, wie es in RFC 821 spezifiziert ist. SMTP ist ein auf TCP/IP aufsetzendes, standardisiertes Applikationsprotokoll. Darin sind Vereinbarungen für die Kommunikation getroffen, wie die Vorstellung des Client-Rechners beim Server-Rechner, Angabe des Absenders der Nachricht, Angabe der Empfänger-Rechners der Nachricht und Beenden des Dialogs. SMTP ist im übrigen Standard für elektronische Post im Internet. Auf UNIX-Systemen, auf denen zum Beispiel die Kommunikations- oder Abteilungsrecher des erfindungsgemäßen Netzwerksystems in einem Krankenhaus laufen, ist SMTP durch das Programm "sendmail" realisiert. Zur Strukturierung der Daten innerhalb der E-Mail wird als standardisierte Abfragesprache die Structured Query Language (SQL) verwendet, wie sie in ISO 9075, 1989, festgelegt wurde. SQL dient im allgemeinen zur Manipulation bzw. zum Abfragen von Daten in Datenbanken; enthält aber auch Datendefinitionselemente (SQL-DDL) zur Definition der Struktur, der Integritätsregeln und der Zugriffsberechtigungen für eine Datenbank sowie Datenmanipulationselemente (SQL-DML) zur Definition von ausführbaren Anweisungen, die für die Manipulation von Daten in einer Datenbank benötigt werden.

Im vorliegenden Fall wird vorteilhaft SQL-DML zum Austausch strukturierter Daten zwischen heterogenen Rechnersystemen genutzt. Dies ist eine Erweiterung gegenüber dem bisherigen Einsatzgebiet, nämlich zur Modifikation von Daten in Datenbanken. SQL-DML stellt in der Regel ausführbare Anweisungen zur Verfügung zum Wiederfinden oder Verwalten (Einfügen, Ändern, Löschen) von Daten aus Datenbanken. Die Objekte der Kommunikationseinheiten, d.h. die ausgetauschten Datentypen, werden mittels der standardisierten Datendefinitionssprache (SQL-DDL) in der Modellierungsphase zwischen den Teilnehmern des Netzwerksystems vereinbart. SQL-DDL enthält Konzepte, welche die Beschreibung der Eigenschaften der Daten, ihre Verknüpfungen und Plausibilitätskontrollen gestatten.

Die über das erfindungsgemäße Netzwerksystem ausgetauschten Nachrichten können strukturierte Daten (SQL-Statements) oder unstrukturierte Daten (ASCII-Texte oder Binary Large Objects (BLOBs) enthalten.

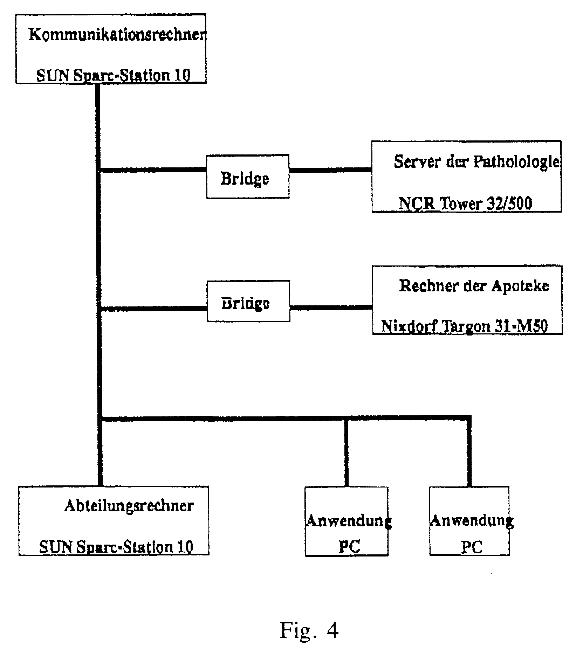

In Fig. 4 wird schließlich eine Hardware-Realisierung des erfindungsgemäßen Netzwerksystems schematisch dargestellt, die insbesondere für die Durchführung des erfindungsgemäßen Verfahrens zum Betreiben eines offenen Datenaustauschs zwischen unterschiedlichen Funktionsbereichen innerhalb und außerhalb eines Krankenhauses ausgelegt ist.

Grundlage des vorgeschlagenen Netzwerksystems ist ein auf Ethernet-Vernetzung basierendes Netzwerk. Alle Rechner im Ethernet-Netz sind vorzugsweise durch ein Koaxial-Kabel verbunden, das als Bus geschaltet ist. Das Koaxial-Kabel ist an den Enden mit einem Wellenwiderstand abgeschlossen, der so bemessen ist, daß Signale nicht reflektiert werden. Der Bus bzw. die Bustopologie zeichnet sich dadurch aus, daß mehrere Rechner passiv an ein Übertragungsmedium (hier Koaxial-Kabel) angeschlossen sind, d.h. die Anwesenheit anderer Rechner hat für die Übertragung von Daten eines bestimmten Rechners keine Auswirkung. Ein sendewilliger Rechner hört den Verkehr auf dem Bus ab. Wenn keine Nachricht vorhanden ist, die Leitung also momentan frei ist, beginnt der Rechner zu senden. Die Passivität des Ethernet-Betriebes erlaubt - besonders vorteilhaft - eine einfache, schnelle Erweiterung mit neuen Rechnern an das Netzwerk im laufenden Betrieb.

In Fig. 4 sind ein leistungsfähiger Kommunikations-Rechner, z.B. eine SUN SPARC Station 10 mit dem Betriebssystem Solaris 2.x, ein entsprechender Abteilungsrechner, zwei einfache Personalcomputer sowie ein Server-Rechner und ein externer Rechner, z. B. in einer Apotheke, am Netzwerk angeschlossen.

Es wird die Kopplung bzw. Kommunikation zwischen Rechnern verschiedener Hersteller mit den unterschiedlichsten darauf ablaufenden Betriebssystemen ermöglicht. Das hier vorgeschlagene Kommunikationsmedium ist auf allen angeschlossenen Rechnern verfügbar und ermöglicht die sichere Übertragung von Daten zwischen beliebigen Absender-Empfänger-Rechnerpaaren. Dies wird insbesondere dadurch erreicht, daß zum Austausch strukturierter Daten zwischen heterogenen Rechnersystemen eine standardisierte Datenmanipulationssprache (DML) verwendet wird. Aber auch die rechnergestützte Weiterverarbeitung von übermittelten Daten ist systemunabhängig. Hierzu wird eine allgemeine Datenstruktur durch Anlegen von einer oder mehreren Tabellen in einem Datenspeicher, z.B. auf der Festplatte des Kommunikations-Rechners, vereinbart, die für die unterschiedlichsten Dateninhalte geeignet ist und mit der jederzeit eine flexible Anpassung an veränderte Umstände möglich ist.

Vorzugsweise sind einzelne Übertragungsstrecken, z.B. zum Server-Rechner oder zum externen Rechner der Apotheke, durch eine sogenannte Brücke (Bridge) an das Netzwerk gekoppelt. Hierdurch ist es möglich, den Server-Rechner bzw. den externen Rechner zu einem weiteren gleichartigen Netz (Subnetz) auszubauen. Eine derartige Kopplung ist unter anderem insofern sinnvoll, da hierdurch Fehler im Netz auf kleinere Teilbereiche ohne Beeinträchtigung anderer Subnetze begrenzt werden und parallele Arbeiten auf lokalen Subnetzen sich gegenseitig nicht beeinflussen. Im übrigen ist eine geographische Erweiterung des Netzwerkes im Krankenhaus auf Funktionsbereiche außerhalb des Krankenhauses möglich, so daß auf diese Weise unterschiedliche Rechner innerhalb und außerhalb des Krankenhauses Daten zur weiteren elektronischen Verarbeitung austauschen können.

Zusammenfassend wird durch das erfindungsgemäße Netzwerksystem zusammen mit dem erfindungsgemäßen Verfahren ein Datenaustauschdienst realisiert, der einen flexiblen Datenaustausch zur weiteren Verarbeitung zwischen unterschiedlichen Rechnersystemen gewährleistet. Dabei kann die Art der Daten verschiedenster Natur sein, und eine Anpassung der Dateninhalte an unterschiedliche Umstände ist jederzeit flexibel möglich.

## Patentansprüche

1. Verfahren zum Betreiben eines offenen Datenaustausches zwischen mehreren über ein Übertragungsmedium verbundenen Rechnern, wobei zwischen Absender- und Empfänger-Rechner in einer Modellierungsphase einmalig das Vokabular, insbesondere Datenstruktur, Integritätsregeln und/oder Zugriffsbedindungen, der auszutauschenden strukturierten und/oder unstrukturierten Daten durch Anlegen einer oder mehrerer Tabellenstrukturen vereinbart wird.

2. Verfahren nach Anspruch 1, dadurch gekennzeichnet, daß das Vokabular strukturierter Daten mittels einer standardisierten Datendefinitionssprache, z.B. Structured Query Language - Data Definition Language (SQL-DDL), festgelegt wird.

3. Verfahren nach Anspruch 1 oder 2, dadurch gekennzeichnet, daß eine standardisierte Datenmanipulationsspra-che, z.B. Structured Query Language - Data Manipulation Language (SQL-DML), zum Austausch strukturieter Daten zwischen insbesondere hetereogenen Rechnern eingesetzt wird.

4. Verfahren nach einem der vorstehenden Ansprüche, dadurch gekennzeichnet, daß die unstrukturierten Daten als ASCII-Texte oder als Binary Large Objects (BLOBs) verarbeitet werden.

5. Verfahren nach einem der vorstehenden Ansprüche, dadurch gekennzeichnet, daß die vereinbarten Tabellenstrukturen in einem Datenbank-Managementsystem (DBMS) angelegt und mit dem Namen des Empfänger-Rechners der strukturierten Daten gekennzeichnet werden.

6. Verfahren nach Anspruch 5, dadurch gekennzeichnet, daß Teilnehmer am Netzwerk auch fremde Applikationen nutzen und für jede Applikation eine zugehörige Datenbank (Pseudo-Datenbank) für den Autausch strukturierter Daten anlegen.

7. Verfahren nach Anspruch 5 oder 6, dadurch gekennzeichnet, daß zusätzlich Zugriffsberechtigungen (GRANT) für bestimmte Absender- bzw. Empfänger-Rechner vereinbart werden.

8. Verfahren nach Anspruch 7, dadurch gekennzeichnet, daß spezielle Datenstrukturen (VIEW) festgelegt werden, dergestalt, daß nur lesende Zugriffe insbesondere auf Daten einer zentralen Datenbank eines Datenbank-Servers zugelassen werden.

9. Verfahren nach einem der vorstehenden Ansprüche, dadurch gekennzeichnet, daß sich an die Modellierungs-phase eine Testphase anschließt, worin die Einhaltung des vereinbarten Vokabulars durch Testfragen an die eingerichteten Tabellen überprüft wird.

10. Verfahren nach einem der vorstehenden Ansprüche, dadurch gekennzeichnet, daß die Teilnehmer am Netzwerk bei Änderungen von bestimmten Tabellenstrukturen in einer zentralen Datenbank automatisch darüber benachrichtigt werden.

11. Verfahren nach einem der vorstehenden Ansprüche, dadurch gekennzeichnet, daß konventionelle Spezialfunktions-Teilsysteme durch entsprechende Treiber eingebunden werden und für jede Anbindung eines konventionellen Spezialfunktions-Teilsystems eine Pseudo-Datenbank angelegt wird.

12. Verfahren nach einem der vorstehenden Ansprüche, dadurch gekennzeichnet, daß die Kommunikation zwischen den insbesondere heterogenen DV-Anlagen über Electronic Mail (E-Mail) abgewickelt und zur Steuerung der Kommunikation ein standardisiertes Steuerprotokoll, z.B. das Simple Mail Transfer Protocol (SMTP), verwendet werden.

13. Verfahren nach einem der vorstehenden Ansprüche, dadurch gekennzeichnet, daß über Gateways Daten mit wenigstens einem weiteren Netzwerk ausgetauscht werden.

14. Verfahren nach einem der vorstehenden Ansprüche, dadurch gekennzeichnet, daß ein Ethernet-Netz zur Datenübertragung und ein standardisiertes Transportprotokoll, z.B. das Transport Control Protocol/Internet Protocol (TCP/IP), zur Steuerung des Datentransports verwendet wird.

15. Netzwerksystem zum Betreiben eines Datenaustausches zwischen mehreren gekoppelten Rechnern, insbesondere zur Durchführung eines der Verfahren nach den vorstehenden Ansprüchen, wobei ein Speicher für das zwischen Absender- und Empfänger-Rechner in Form von einer oder mehreren Tabellen festgelegte Vokabular, insbesondere Datenstruktur, Integritätsregeln und/oder Zugriffsbedingungen, der auszutauschenden strukturierten und/oder unstrukturierten Daten vorgesehen ist.

16. Netzwerksystem nach Anspruch 15, gekennzeichnet durch wenigstens einen Kommunikations-Rechner, wenigstens einen Datenbank-Server-Rechner, wenigstens einen Client-Rechner, die über eine oder mehrere Brücken miteinander verbunden sind.

17. Netzwerksystem nach Anspruch 15 oder 16, dadurch gekennzeichnet, daß das Netzwerksystem über Gateways mit wenigstens einem weiteren Netzwerksystem gekoppelt ist.

18. Netzwerksystem nach einem der Ansprüche 15-17, gekennzeichnet durch einen Anschluß an Telematikdienste, insbesondere Telex, Teletex, Telefax und/oder Bildschirmtext.

19. Netzwerksystem nach einem der Ansprüche 15-18, gekennzeichnet durch eine Ethernet-Vernetzung.

20. Netzwerksystem nach Ansprüche 19, dadurch gekennzeichnet, daß die Rechner über Kupferleitungen, KoaxialkabeI oder Glasfasern verbunden sind.

21. Netzwerksystem nach Ansprüche 19, gekennzeichnet durch eine drahtlose Verbindung der Rechner, insbesondere über Infrarot oder Funknetze.
